# EUROPEAN PATENT APPLICATION

(11) **EP 2 452 930 A1**
(43) Date of publication of application: **16.05.2012**
(21) Application number: 11188683.4
(22) Date of filing: 10.11.2011
(51) Int. Cl.: C05F 17/00, A61L 9/013, C05B 1/00, C05C 5/00, C05C 5/02, C05C 5/04, C05D 1/02, C05D 3/02, C05D 5/00, C05D 9/00, C05D 9/02, C05F 11/08

(54) **Composition for enhancing composting processes**

(30) Priority: 11.11.2010 IT UD20100203
(71) Applicant: Universita' Degli Studi di Udine, 33100 Udine (IT)
(72) Inventor: Bertoni, Aldo, 33010 Reana del Rojale (UD) (IT); Contin, Marco, 33100 Udine (IT); Cudini, Andrea, 33030 Coseano (UD) (IT); De Nobili, Maria, 33033 Codroipo (UD) (IT)
(74) Representative: Petraz, Gilberto Luigi

(57) **Abstract**

A composition in dried powder form to improve the composting process of organic waste, to abate the development of unpleasant smells and to obtain a final composted product with enriched fertilizing capacities comprises one or more nitrogen-based components in the form of nitrate, between about 50% and about 90% in weight, one or more phosphorus-based components, between about 2% and about 18% in weight, and one or more potassium-based components, with the provision that the one or more potassium-based components can coincide, or not, with the one or more nitrogen-based components.

## Description

### FIELD OF THE INVENTION

The present invention concerns a composition for composting, in particular in the form of a dry powder that is distributed on the pile of waste in the compost bin in order to optimize the humification process, increase the fertilizing value of the compost produced and at the same time to abate the development of unpleasant smells and the proliferation of insects.

### BACKGROUND OF THE INVENTION

It is known that waste disposal is a serious problem from an economic point of view for local administrations. There is a growing tendency to encourage differentiated collection in order to promote recycling of materials and to reduce rubbish sent to the tip. Composting is also encouraged, in both industrial and domestic plants. However, this process may have some disadvantages, mainly connected to the development of unpleasant smells and the proliferation of annoying insects. The compost produced, in both industrial and domestic plants, is normally used as an amender, given that it does not generally have a sufficient endowment of fertilizing elements such as mainly nitrogen (N), phosphorus (P) and potassium (K).

The fertilizing value of the best industrially produced compost, so-called "quality compost", is influenced by the composition of the initial material which on average consists of about 36% of organic fraction from solid urban residues, 33% of lignocellulosic residues (green discards from pruning, leaves, branches, grass-cuttings etc.), up to 16% of sludge (urban and agro-industrial) and 15% of organic waste of other types.

This composition entails an initial carbon/nitrogen ratio (hereafter and throughout the description C/N) that is too high for the composting process: it slows down the humification and decomposition of the material by the microorganisms due to the limited availability of nitrogen. On a domestic compost production level as well, given that the waste is mostly green, from cutting or pruning, and varies seasonally, the C/N ratio is not constant and often is too high.

Apart from slowing down the composting process and making it less efficient, a high C/N ratio can lead to an immobilization of the nitrogen in the microbic biomass and to a lack of this element in crops after the compost has been put on the ground.

The production of unpleasant smells is another disadvantage with a heavy environmental and social impact, and represents a limitation on the use of composting, on both a domestic and plant level. The development of unpleasant smells derives from conditions of anaerobiosis which are created in the material being processed, even if this in theory should not happen because composting by definition is an aerobic process and operating conditions are chosen so as to supply the microorganisms with sufficient oxygen.

The production of unpleasant smells can be reduced by optimizing the oxygenation of the material, but in many cases this is technically difficult or expensive on an industrial level, while on a domestic level it would entail the compost heap to be frequently turned over, which is a tiresome operation not always easy due to the limited sizes and poor mechanical resistance of compost bins made of plastic material.

There are on the market components based on enzymes, organic substances and/or microorganisms for use on a domestic level, but in practice these are not very effective and are very expensive. The enzymes added are proteins, and are by nature easily degradable and are therefore decomposed in a few hours. It is therefore impossible for them to perform their function for a long enough period of time. The inoculum of microorganisms also has a doubtful practical effect, since the organic mass of waste in itself possesses an extremely high microbic load and the microorganisms added with the inoculum in reality constitute a very small fraction with respect to the already active autochthonous population.

On an industrial level, the smells are treated by chemical-physical abatement (thermal/catalytic combustion), adsorption on active carbon, oxidation and chemical absorption (scrubber), biological oxidation (biofilters). These solutions entail expensive investments, in economics, management and maintenance.

Another problem keenly felt on the domestic level is the annoying and unhygienic proliferation of insects, especially Diptera, attracted by the fermenting organic material where they find an optimum habitat for laying their eggs.

Problems connected to unpleasant and annoying smells and insects are particularly felt in the summer months, on both a domestic and industrial level.

Document GB-A-1.260.554 (GB'554) concerns the production of humic acids and not the optimization of composting. In GB'554 the humic acids can be enriched with a mixture of inorganic salts which comprise ammonium nitrate, to produce a fertilizer.

Document GB-A-1.602.300 (GB'300) provides to add an additive for composting grass cuttings. The additive in GB'300 is mainly composed of an organic component and also comprises ammonium nitrate or sulfate, or urea, but does not provide potassium.

The only purpose of the additive in GB'300 is to control the carbon/nitrogen (C/N) ratio.

Document WO-A-2009/074824 (WO'824) concerns a process to obtain a fertilizing product, enriched with the main nutritive elements. WO'824 describes the processing of organic material with the addition of raw minerals and subsequent passes. In the mixture described in WO'824 there is a high percentage of organic component and a very small part of mineral elements. Moreover, in WO'824 raw minerals are added with a relatively low titre of fertilizing elements and with a low yielding capacity.

Document CN-A-101712566 (CN'566) deals with a method of preparing a particular "biofertilizer", by adding nutritive elements and inocula of microorganisms to a pile of straw. Therefore, CN'566 concerns a particular composting method intended to produce a fertilizer. CN'566 provides to add nutritive compounds, in particular with regard to calcium nitrate. CN'566 provides to add microorganisms with an inoculum function and hence to support the composting action.

Document US-A-2010/024500 (US'500) describes the mixing of an organic component with another having a mineral origin in order to obtain an amender for the soil, which contains potassium sulfate and provides nitrogen enrichment such as ammonium nitrate and ammonium sulfate.

Purpose of the present invention is to achieve a composition which allows an improvement in the composting process of organic waste, and to obtain a final product enriched with fertilizing elements.

The invention intends to encourage on the one hand domestic users to use a domestic compost bin, thus reducing the quantity of waste sent to plants, and on the other hand to make more tolerable the presence of compost plants situated near built-up areas and to effectively incentivize farmers to use the compost produced. Indeed, for various reasons, farmers have not generally taken to the use of compost. One of these reasons is the low fertilizing power, which only partly compensates for the costs of incorporating it in the soil. The invention allows to enrich the final product with nutritive elements, considerably increasing its effectiveness as a fertilizer.

The Applicant has devised, tested and embodied the present invention to overcome the shortcomings of the state of the art and to obtain these and other purposes and advantages.

Unless otherwise defined, all the technical and scientific terms used here and hereafter have the same meaning as commonly understood by a person with ordinary experience in the field of the art to which the present invention belongs.

Even if methods and materials similar or equivalent to those described here can be used in practice and in the trials of the present invention, the methods and materials are described hereafter as an example. In the event of conflict, the present application shall prevail, including its definitions. The materials, methods and examples have a purely illustrative purpose and shall not be understood restrictively. The percentage content in weight of the various components of the present invention is intended as referring to the weight of the overall composition.

### SUMMARY OF THE INVENTION

The present invention is set forth and characterized in the independent claim, while the dependent claims describe other characteristics of the invention or variants to the main inventive idea.

In accordance with the above purposes, a composition in the form of dried powder according to the present invention is used to improve the composting process of organic waste, to abate the development of unpleasant smells, to reduce the proliferation of insects and to obtain a final compost product with enriched fertilizing capacities.

The composition according to the present invention comprises one or more nitrogen-based components in the form of nitrate, between about 50% and about 90% in weight, except for ammonium-based components, such as ammonium nitrate or ammonium sulfate, urea or other components, the decomposition of which leads to the development of ammonia, one or more phosphorus-based components, between about 2% and about 18% in weight, and one or more potassium-based components, with the provision that the one or more potassium-based components can coincide, or not, with the one or more nitrogen-based components.

The high percentage of nitrate, between about 50% and about 90%, determines an optimum control and adjustment of the C/N ratio in the composting process, in particular taking into account that normally this ratio is imbalanced toward an excess of carbon.

The use of the nitrate-based components is advantageous with respect to other compounds containing nitrogen in that the rapid diffusion of the nitrogen in nitric form, with respect to nitrogen in ammonia or organic form, facilitates a better and more homogeneous availability inside the biomass.

In this way a good balance is quickly created in the C/N ratio, as this parameter is fundamental in the start-up of the composting. Optimum C/N ratios are generally considered those for example comprised between 25 and 35. An imbalanced ratio in favor of carbon in particular impedes the proliferation of bacteria, on the contrary promoting that of fungi and conditioning the chemical reactions that occur in the pile of waste at the start of the composting process, slowing down the decomposition thereof. Furthermore, since it is an electron-acceptor, nitrate promotes the proliferation of the optional anaerobic microorganisms at the expense of the obligatory anaerobes in possible zones where the diffusion of a sufficient quantity of oxygen is difficult, and impedes the onset of fermentation processes, blocking the development of unpleasant smells.

In fact, the present invention also simultaneously exerts the function of controlling the malodorous substances that develop in the fermentation of the organic pile. It intervenes in advance against the formation of bad smells, preventing or reducing the formation thereof and their consequent diffusion in the environment. Indeed, the components according to the present invention can be directly used by the microorganisms in biological reactions of anaerobic respiration as an alternative to the fermentation reactions that develop in a pile of organic waste when there is a lack of oxygen, which are the cause of the formation of malodorous composts.

The presence of components as expressed in the percentages above, which comprise nitrogen, phosphorus and potassium, determines an increase in the fertilizing capacities of the final compost. Indeed, the balanced presence of nutritive elements obtained with the percentages of nitrogen, phosphorus and potassium as in the present invention ensures that the compost has a considerable fertilizing value.

The improvement of this value is completed by the presence in the composition according to the invention of other nutritive elements, which thus further enrich the fertilizing power of the compost and can guarantee the correction of possible deficiencies such as for example ferric chlorosis (lack of iron).

In some embodiments, the nitrogen-based component is potassium nitrate, or calcium nitrate or magnesium nitrate.

In some embodiments, the phosphorus-based component is phosphorite, or triple superphosphate, or simple superphosphate.

In embodiments where the potassium-based component coincides with the nitrogen-based component, it is potassium nitrate. In such embodiments, the composition does not comprise other potassium-based components.

In embodiments where the potassium-based component does not coincide with the nitrogen-based component, it may be potassium chloride or potassium sulfate. In variants of this embodiment, the potassium-based component is comprised between about 3% and about 20% in weight.

In other embodiments, the composition according to the present invention may comprise one or more magnesium-based components, with the provision that the one or more calcium-based components may coincide, or not, with the one or more nitrogen-based components.

In embodiments where the magnesium-based component coincides with the nitrogen-based component, it is magnesium nitrate. In such embodiments, the composition does not comprise other magnesium-based components.

In embodiments where the magnesium-based component does not coincide with the nitrogen-based component, it may be complexed magnesium or magnesium sulfate. In variants of this embodiment, the magnesium-based component is comprised between about 1% and about 10% in weight.

In other embodiments, the composition according to the present invention may comprise one or more calcium-based components, with the provision that the one or more calcium-based components may coincide, or not, with the one or more nitrogen-based components.

In embodiments where the calcium-based component coincides with the nitrogen-based component, it is calcium nitrate. In such embodiments, the composition does not comprise other calcium-based components.

In embodiments where the calcium-based component does not coincide with the nitrogen-based component, it may be calcium carbonate or calcium hydroxide. In variants of this embodiment, the calcium-based component is comprised between about 1% and about 21% in weight. The calcium-based components have a buffer function on the pH and contribute to the dehydration of the organic waste.

In other embodiments, the composition according to the present invention may comprise one or more iron-based components, such as iron oxide or iron chelate or complexed iron. In variants of this embodiment, the one or more iron-based components are between about 1% and 12% in weight.

The advantageous technical effect of the iron-based components as above is that, since they are electron-acceptors, they promote the proliferation of the optional anaerobic microorganisms at the expense of the obligatory anaerobes and prevent the onset of fermentation processes, and therefore the development of unpleasant smells. During the composting process the added iron also forms complexes with the organic substance, becoming a source of iron available for the plants and an effective mean to control ferric chlorosis.

In other embodiments, the composition according to the present invention may comprise one or more clay-based components, such as bentonite. In variants of this embodiment, the one or more clay-based components are between about 1% and about 25% in weight. The clay-based components promote the dehydration of the waste, reducing possible excess liquid that limits the diffusion of the oxygen.

In further embodiments, the composition according to the present invention may comprise one or more components based on humic acids, such as leonardite. In variants of this embodiment, the one or more components based on humic acids are between about 0% and about 24% in weight.

The advantageous technical effect of the components based on humic acids, in particular leonardite, is that they promote the transfer of electrons to acceptors such as iron or the nitrates.

The compost produced with the addition of the composition according to the present invention becomes an excellent agricultural fertilizer, where all the macroelements needed as nutrition are present, and a desired percentage of microelements and humic substances that render it complete, avoiding the need for further interventions of adding mineral fertilizers in a majority of cultivations.

In further embodiments, the composition according to the present invention may comprise one or more components with an insecticide action, such as *Bacillus thuringiensis* var. *israelensis* (Bti). In variants of this embodiment, the one or more components with an insecticide action are between about 0.1% and about 5% in weight. The advantageous technical effect of the Bti is that it kills the larvae in particular of Diptera and prevents flies, larvae etc. from reproducing, while respecting the presence in the environment of useful insects.

The composition according to the present invention may be applied both in domestic applications, in the domestic compost bin, and also in the industrial field in plants for the collection and processing of the organic fraction of waste for the production of high quality compost. The use, and the relative benefits it entails, is promoted by the fact that the composition is environmentally friendly, since its components protect the environment, are inexpensive, easy to prepare and package and use as a dry powder which is easily scattered on the pile of material to be composted.

The present invention therefore not only controls the C/N ratio, but also provides further benefits compared to GB'300.

The present invention, unlike GB'554 and GB'300, does not contain ammonium nitrate or urea, since they can lead to the loss of nitrogen in the form of ammonia, with an unwanted increase in the pH, to be avoided for the purposes of the application of the present invention. In any case, nitrates, or sources of nitrogen, present in the composition according to the present invention, moreover like all the other possible salts, are in any case in a considerably higher percentage than ammonium nitrate and other components contained in GB'554. The composition described in GB'554 furthermore leads to the production of a completely different product from the present invention: an organic-mineral fertilizer. On the contrary, the composition for compost according to the present invention is intended to produce compost which, in consideration of the different content of nitrogen and phosphorus, is not considered by the law an organic-mineral fertilizer (Legislative Decree n. 75 of 26-5-2010, Ordinary supplement n. 106/L to the Official Gazette general series n. 121), but an organic amender.

Unlike GB'300, the composition according to the present invention concerns the composting of organic waste consisting of mixtures of different types.

Furthermore, compared with GB'300, the present invention provides only a minimum part of organic component in the formula, and in any case consists of substances that are different in origin, chemical structure and properties.

The percentage of nitrogen compound reported in GB'300 is less than that provided by the present invention, which unlike GB'300, does not include ammonium nitrate or sulfate, or urea, whereas it does contain potassium, not provided in GB'300.

Moreover, the present invention provides values of the organic component and mineral elements that are very distant from the percentages in WO'824. Furthermore, in the present invention there are chemical compounds with a high content and high bio-availability of the elements involved, compared with WO'824. And again, compared with WO'824, the increase in nutritive elements for the plants is only one of the multiple advantages given by the present invention, as an effect of its use, mainly intended to improve the composting process.

Compared with CN'566, the present invention provides a very different percentage of nitrogen sources, in particular calcium nitrate, and does not include urea. Furthermore, the possible microorganisms contained in the present invention have an exclusively insecticide action.

The present invention supplies a compound additive that improves the composting of organic waste of various nature and composition which, compared with US'500, does not provide enrichment with ammonium nitrate and ammonium sulfate.

### EXAMPLE 1

In the domestic field the present invention can be used by families that have a compost-maker. It can be distributed by means of small containers made of plastic material, having a holed stopper that allows to deliver the powder directly onto the organic waste. This procedure is preferentially carried out every time that new organic material is added to the compost-bin. The invention can be preserved at ambient temperature.

### EXAMPLE 2

On an industrial level the present invention can be used in composting plants for processing the organic fraction of solid urban waste, green discards and urban and agro-industrial sludge. It can also be packed in large sacks. When fresh organic waste arrives, the composition is added to the pile and amalgamated by the means present in the plants during the procedures already envisaged by the process for turning the waste over and homogenizing it.

### EXAMPLE 3

The present invention can also be distributed and amalgamated with the waste already in the transport vehicle, by means of a suitable dosing device. In this case, the organic waste can be stored without problems while waiting to be loaded into the plant.

## Claims

1. Composition in dried powder form to improve the composting process of organic waste, to abate the development of unpleasant smells and to obtain a final composted product with enriched fertilizing capacities, **characterized in that** it comprises one or more nitrogen-based components in the form of nitrate, between about 50% and about 90% in weight, except for ammonium-based components, such as ammonium nitrate or ammonium sulfate, urea or other components the decomposition of which leads to the development of ammonia, one or more phosphorus-based components, between about 2% and about 18% in weight, and one or more potassium-based components, with the provision that the one or more potassium-based components can coincide, or not, with the one or more nitrogen-based components.

2. Composition as in claim 1, **characterized in that** the nitrogen-based component is potassium nitrate, calcium nitrate or magnesium nitrate.

3. Composition as in claim 1 or 2, **characterized in that** the phosphorus-based component is phosphorite, or triple superphosphate, or simple superphosphate.

4. Composition as in claim 1, **characterized in that** the potassium-based component coincides with the nitrogen-based component and is potassium nitrate.

5. Composition as in claim 1, **characterized in that** the potassium-based component is chosen between potassium chloride, or potassium sulfate.

6. Composition as in claim 5, **characterized in that** the potassium-based component is comprised between about 3% and about 20% in weight.

7. Composition as in any claim hereinbefore, **characterized in that** it comprises one or more magnesium-based components, with the provision that the one or more magnesium-based components can coincide, or not, with the one or more nitrogen-based components.

8. Composition as in claim 7, **characterized in that** the magnesium-based component is magnesium nitrate.

9. Composition as in claim 7, **characterized in that** the magnesium-based component is selected between complexed magnesium or magnesium sulfate.

10. Composition as in claim 9, **characterized in that** the magnesium-based component is comprised between about 1% and about 10% in weight.

11. Composition as in any claim hereinbefore, **characterized in that** it comprises one or more calcium-based components, with the provision that the one or more calcium-based components can coincide, or not, with the one or more nitrogen-based components.

12. Composition as in claim 11, **characterized in that** the calcium-based component is calcium nitrate.

13. Composition as in claim 11, **characterized in that** the calcium-based component is chosen from either calcium carbonate or calcium hydroxide.

14. Composition as in claim 13, **characterized in that** the calcium-based component is comprised between about 1% and about 21% in weight.

15. Composition as in any claim hereinbefore, **characterized in that** it can comprise one or more iron-based components, such as iron oxide or iron chelate or complexed iron.

16. Composition as in claim 15, **characterized in that** one or more iron-based components are between about 1% and 12% in weight.

17. Composition as in any claim hereinbefore, **characterized in that** it comprises one or more clay-based components such as bentonite.

18. Composition as in claim 17, **characterized in that** the one or more clay-based components are between about 1% and about 25% in weight.

19. Composition as in any claim hereinbefore, **characterized in that** it comprises one or more components based on humic acids, such as leonardite.

20. Composition as in claim 19, **characterized in that** the one or more components based on humic acids are between about 0% and about 24% in weight.

21. Composition as in any claim hereinbefore, **characterized in that** it comprises one or more components with an insecticide action, such as *Bacillus thuringiensis* var. *israelensis* (Bti).

22. Composition as in claim 21, **characterized in that** the one or more components with an insecticide action are between about 0.1% and about 5% in weight.
